# EUROPEAN PATENT APPLICATION

(11) **EP 0 945 054 A1**
(43) Date of publication of application: **29.09.1999**
(21) Application number: 99200556.1
(22) Date of filing: 26.02.1999
(51) Int. Cl.: A01G 31/02

(54) **Plant installation with associated irrigation system**

(30) Priority: 25.03.1998 BE 9800235
(71) Applicant: N.V. BEKAERT S.A., 8550 Zwevegem (BE)
(72) Inventor: Canthier, Jean Pierre, 52100 Bettancourt-la-ferrée (FR)
(74) Representative: Demeester, Gabriel

(57) **Abstract**

The invention relates to a plant installation (1) with an associated irrigation system (2) for trickle supply of water to plants or flowers (7) in the plant installation (1), whereby the plant installation (1) comprises a U-shaped supporting frame (3) consisting of longitudinal wires (4) and transverse wires (5) welded to each other to receive a cultivation bed (6) for the plants or flowers (7) and a supporting grid (9) of welded longitudinal wires (10) and transverse wires (11) secured to the said U-shaped supporting frame (3), and that the irrigation system (2) comprises at least one feed pipe (15) applied into the channel (14) between the supporting frame (3) and the supporting grid (9), said pipe (15) having apertures (16) for the connection thereto of separate water feed lines (17).

## Description

The present invention relates to a plant installation with an associated irrigation system for the trickle supply of water to the plants or flowers in the plant installation.

It is a common method to grow plants or flowers in hothouses or greenhouses, the plants or flowers in these hothouses or greenhouses being planted in a cultivation bed, such as a cultivation box or flower pot, and being supplied with water and the necessary nutrients; usually, the nutrients are administered via the supply of water to the plants and flowers.

The term "trickle water supply" to the plants or flowers in the plant installation is intended to mean that the water is supplied to the plants in the plant installation under strictly controlled conditions. The special control of the water supply is done, for example, by providing a separate water feed line for each plant or for each small group of plants.

It is an object of the present invention to provide a new type of plant installation with associated irrigation system for the supply of water, whereby the supply of the correct amount of water and the preheating of the water supplied to the plants or flowers can be done in a simple manner.

It is another object of the present invention to provide a new type of plant installation with associated irrigation system, whereby the water feed pipes and the pipes for the preheating of the cultivation bed and the feed water can be applied in the plant installation in a compat manner and removed with equal ease. It is of great importance here that the water feed pipes and the associated heating pipes for the heating of the feed water are readily accessible as well as being adequately protected against possible damage.

To obtain the aforementioned objects, the present invention proposes, for a plant installation with associated irrigation system of the type mentioned in the introduction, that the plant installation comprises a U-shaped supporting frame consisting of longitudinal and transverse wires welded together to receive a cultivation bed for the plants or flowers and a supporting grid of welded longitudinal and transverse wires fixed to the said U-shaped frame, and that the irrigation system comprises at least one feed pipe applied into the horizontal channel between the frame and the supporting grid, said feed pipe having apertures for the connection thereto of separate feed lines.

Preferably, at least one heating pipe is fitted in the horizontal channel between the supporting frame and the supporting grid, said heating pipe running practically parallel along the water feed pipe.

Preferably, the width of the frame is slightly greater than the width of the supporting grid.

The present invention will be explained in the following description with reference to the accompanying drawing. In the drawing :
- Figure 1: shows, in perspective, a part of the plant installation with a corresponding part of the irrigation system according to the present invention, and
- Figure 2: shows, in perspective, a wire frame with its corresponding supporting grid for use in a plant installation according to the present invention.

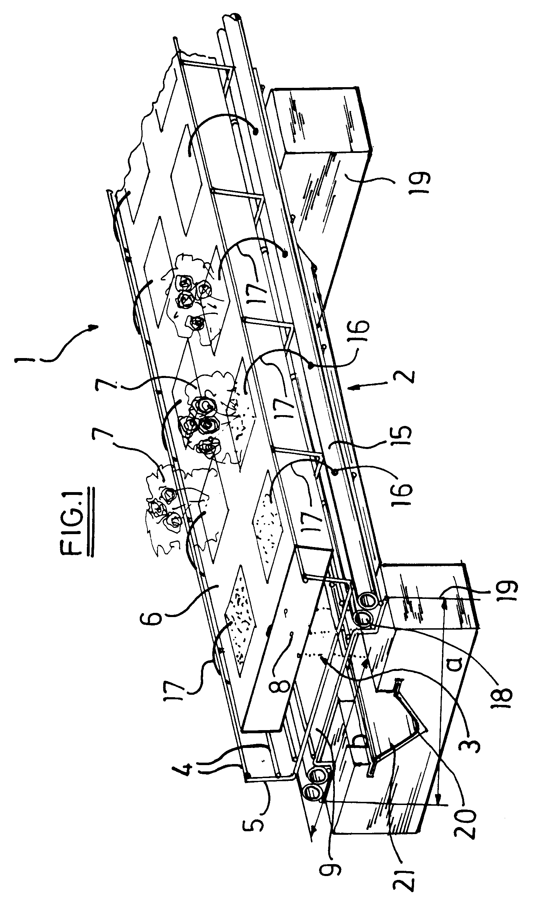

Figure 1 shows in perspective a part of a plant installation 1 with a corresponding part of an irrigation system 2 according to the present invention. The plant installation 1 consists of a U-shaped supporting frame 3 of longitudinal wires 4 and transverse wires 5 which are welded together. The supporting frame 3 has a nearly U-shaped cross-section or, in other words, the transverse wires 5 are bent nearly U-shaped. The actual cultivation bed 6 for the plants or flowers 7, such as earth or other substrates in a covering with apertures 8 for water drainage, rests upon the supporting frame 3.

The plant installation 1 according to the present invention further contains a supporting grid 9 of longitudinal wires 10 and transverse wires 11 which are welded together ; the U-shaped transverse wires 5 of the supporting frame 3 being welded to the uppermost longitudinal wires 10 of the supporting grid 9. The supporting transverse wires 11 display a substantially straight middle section 12 and two hooked ends or supports 13. At the position of the supports 13, two longitudinal spaces or longitudinal channels 14 thus run between U-shaped supporting frame 3 and supporting grid 9 attached thereto, said channels receiving the feed pipes 15 for the supply of water to the plants or flowers 7 in the plant installation 1.

In the embodiment of the plant installation 1 according to the present invention shown in figure 1, the width "a" of the supporting grid 9 is slightly smaller than the width "b" of the U-shaped supporting frame 3, facilitating the stacking of such identical wire constructions - i.e., a supporting frame 3 with supporting grid 9 welded on - during transport or storage in empty condition.

The water feed pipes 15 in the channels 14 form an essential part of the irrigation system 2 of the plant installation 1 according to the present invention. Each feed pipe 15 has apertures 16 with connected feed lines 17 for the watering of the plants or flowers 7. As is apparent in figure 1, this allows efficient regulation of the water supply to a plant or flower 7 or to a small group of plants and flowers 7 in the cultivation bed 6, each plant or flower or small group thereof having its own separate water feed line 17.

Figure 1 also shows that each longitudinal channel 14 between supporting frame 3 and supporting grid 9 accommodates one heating pipe 18 for running hot water through. The heating pipe 18 runs practically parallel alongside the water feed pipe 15. In this way it is possible to preheat the water supplied to the plants or flowers.

The supporting grid 9 is supported at regular intervals by blocks 19 made of plastics, wood or other material. The blocks 19 preferably show substantially V-shaped notches 20.

The irrigation system 2 further includes a drainage gutter 21 running below the apertures 8 in the cultivation bed 6. The gutter 21 displays a V-shaped cross-section and engages in the V-shaped notches 20 in the blocks 19. Figure 1 shows clearly that the water sent to the plant installation 1 is absorbed by the plants or flowers 7, but any excess water runs off via the apertures 8 in the cultivation bed 6 to the drainage gutter 21. After cleaning and addition of the desired nutrients, it is thus possible to recycle the water collected in the gutter 21 via the feed pipe 15.

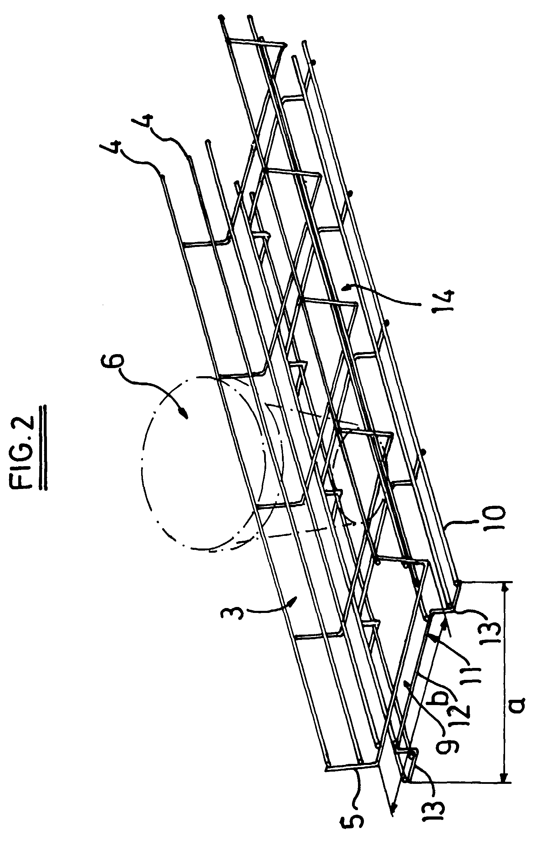

Figure 2 shows, in perspective, an embodiment of a supporting frame 3 and its associated supporting grid 9 according to the present invention, whereby only a flower pot 6 is schematically represented as a possible cultivation bed 6. All the other elements shown in Figure 1, e.g.. feed pipes 15, heating pipes 18, ... are omitted for the sake of clarity. All the reference numbers given in figure 2 have the same meaning as the reference numbers given in figure 1. The supporting frame 3 with the supporting grid 9 secured thereto together form the basic structure of the plant installation according to the present invention.

## Claims

1. Plant installation (1) with an associated irrigation system (2) for trickle supply of water to plants or flowers (7) in the plant installation (1), characterized in that the plant installation (1) comprises a U-shaped supporting frame (3) consisting of longitudinal wires (4) and transverse wires (5) welded to each other to receive a cultivation bed (6) for the plants or flowers (7) and a supporting grid (9) of welded longitudinal wires (10) and transverse wires (11) secured to the said U-shaped supporting frame (3), and that the irrigation system (2) comprises at least one feed pipe (15) applied into the channel (14) between the supporting frame (3) and the supporting grid (9), said pipe (15) having apertures (16) for the connection thereto of separate water feed lines (17).

2. Plant installation according to claim 1, characterized in that at least one heating pipe (18) is housed in the longitudinal channel (14) between the supporting frame (3) and the supporting grid (9), said pipe (18) running practically parallel along the water feed pipe (15).

3. Plant installation according to claim 1 or to claim 2, characterized in that the width (b) of the supporting frame (3) is slightly greater than the width (a) of the supporting grid (9).

4. U-shaped supporting frame (3) with an attached supporting grid (9), according to any one or more of the foregoing claims 1 - 3, characterized in that the supporting frame (3) with the attached supporting grid (9) is intended for use in a plant installation (1) with an accompanying irrigation system (2) according to any one or more of the foregoing claims 1 - 3.
